# EUROPÄISCHE PATENTSCHRIFT

(11) **EP 1 463 219 B1**
(45) Veröffentlichungstag und Bekanntmachung des Hinweises auf die Patenterteilung: **27.08.2008**
(21) Anmeldenummer: 03006984.3
(22) Anmeldetag: 27.03.2003
(51) Int. Cl.: H04B 10/213, B63H 21/22, B63B 43/00, G08B 25/01

(54) **Schiff mit einem Lichtwellenleiternetzwerk**
Ship comprising an optical fibre network
Bâteau comprenant un réseau en fibre optique

(43) Veröffentlichungstag der Anmeldung: 29.09.2004
(73) Patentinhaber: Blohm + Voss GmbH, 20457 Hamburg (DE)
(72) Erfinder: Voss, Michael, 24146 Kiel (DE); Tahsin-Bey, Thomas, 24211 Preetz (DE); Schneider, Dirk, 24146 Kiel (DE)
(74) Vertreter: Hansmann, Dierk

(56) Entgegenhaltungen:
- EP-A- 0 952 694
- EP-A- 1 178 571
- WO-A-88/07245
- WO-A-02/065778
- DE-A- 3 235 238
- RU-C- 2 131 168
- US-A- 4 422 180
- US-A1- 2002 015 565
- US-A1- 2002 121 969

## Beschreibung

Die Erfindung betrifft ein Wasserfahrzeug, insbesondere ein Schiff zur Beförderung von Personen und/oder Gütern, beispielsweise ein Kreuzfahrtschiff, ein Fährschiff oder ein Frachtschiff.

Allen vorgenannten Schiffen gemeinsam ist, dass sie heutzutage eine Vielzahl von Steuereinrichtungen, Signaleinrichtungen und Kommunikationseinrichtungen aufweisen, welche jeweils komplexe Netzwerke darstellen, die innerhalb des Schiffs zu installieren sind. Darüber hinaus ist aufgrund der rapiden Entwicklung der Informations- und Kommunikationstechnologie insbesondere für Kreuzfahrt- oder Fährschiffe eine Vielzahl von Systemen zu installieren, welche den steigenden Kommunikationsansprüchen der Passagiere Rechnung tragen. So zählt es heutzutage zum Stand der Technik, dass eine Kabine nicht nur mit Telefon, sondern auch mit Fernsehen, Internet und Intranet ausgerüstet ist. Daneben sind die sicherheitstechnischen Systeme zu versorgen wie Feuerschutzeinrichtungen, Lautsprechereinrichtungen und vieles mehr. All diese Einrichtungen werden üblicherweise über elektrische Leitungen miteinander verbunden, jedes System stellt praktisch ein eigenes Netzwerk mit eigenen Leitungen dar.

Aufgrund der Vielzahl der zu versorgenden Systeme und ihrer zunehmenden Komplexität bereitet die Installation dieser Netze mehr und mehr Probleme. So dürfen die elektrischen Leitungen beispielsweise bei Passagierschiffen nicht über den Kabinen verlegt sein. Hier verbleibt häufig nur der Raum über den Gängen, der eng begrenzt ist. Da die Systeme teilweise noch mit Abstand zueinander zu installieren sind, wird dieser Einbauraum zunehmend knapp.

Darüber hinaus müssen entsprechend sichere Kabeldurchführungen zwischen den einzelnen Feuerschutzzonen des Schiffes erfolgen. Dies ist aufwändig und teuer.

Neben den Herstellungs- und Installationskosten für die bei modernen Schiffen mehrere hundert Kilometer langen und zu verlegenden kabel bringen diese vermehrten Kabelinstallationen neben den Raumproblernen zunehmend auch Gewichtsprobleme mit sich, da das hierdurch zusätzlich in das Schiff eingebrachte Gewicht der kabel nicht zu vernachlässigen ist und den Schwerpunkt des Schiffes ungünstig nach oben verschiebt.

Aus DE 3235 238 A1 zählt es zum Stand der Technik, ein Datenübertragungssystem für ein Führungs- und Waffeneinsatzsystem an Bord eines Schiffes als Netzwerk auszulegen, wobei aus Sicherheitsgründen das Netzwerk in zwei backbord und steuerbordseitig angeordnete Busse getrennt ist, die einzelne Stemkoppler dezentral ansteuem, die die einzelnen Teilnehmer miteinander verbinden.

In EP 1 178 571 A2 ist beschrieben, wie zu einer durchlaufenden Leltung eine Leitungsverbindung hergestellt werden kann, ohne die durchlaufende Leitung zu unterbrechen, sondern dadurch dass die Leitung durch einen, die Isolierung durchsetzenden Kontakt von außen kontaktiert wird.

Ausgehend von dem Stand der Technik nach DE 3235 238 A1 liegt der Erfindung die Aufgabe zugrunde, ein Wasserfahrzeug, insbesondere ein Schiff so auszubilden, dass die Menge der zu verlegenden kabel ver-mindert wird, ohne die dadurch gebildeten Funktionen und Verknüpfungen zu vermindern.

Diese Aufgabe wird gemäß der Erfindung durch die in Anspruch 1 angegebenen Merkmale gelöst. Vorteilhafte Ausgestaltungen der Erfin-dung sind in den Unteransprüchen, der nachfolgenden Beschreibung sowie in der Zeichnung angegeben.

Wasserfahrzeug im Sinne der vorliegenden Erfindung ist insbesondere ein Schiff, kann jedoch auch ein Unterseeboot oder ein anderes Fahrzeug auf oder unter Wasser sein.

Erfindungsgemäß ist somit vorgesehen, ein Wasserfahrzeug insbesondere ein Schiff mit einer Vielzahl von Steuereinrichtungen Signaleinrich-tungen und Kommunikationseinrichtungen mit einem diese verbindenden, gemeinsamen, digitalen Netzwerk auszustatten, wobei dieses Netzwerk mindestens in seiner Hauptebene als Lichtwellenleiternetzwerk ausgebildet ist. Der Grundgedanke der vorliegenden Erfindung ist also, die Vielzahl von Steuereinrichtungen, Signaleinrichtungen und Kommu-nikationseinrichtungen über ein physikalisch gemeinsames, digitaler Netzwerk miteinander zu verbinden. Dieses Netzwerk soll gemäß der Erfindung mindestens in seiner Hauptebene als Lichtwellenleitemetz-werk ausgebildet sein. Ein Lichtwellenleiternetzwerk in der Hauptebene ist besonders geeignet, da es einerseits im Vergleich zu einem elektrischen Netzwerk eine wesentlich höheren Datendichte und damit auch einen höheren Datendurchsatz ermöglicht und andererseits, die auf einem Schiff üblichen Entfernungen ohne weiteres überbrückt, ohne Repeater zu benötigen. Das Lichtwellenielternetzwerk ist für den Einsatz im Schiff auch deshalb besonders prädestiniert, da die aus Glasfasern (Multimode oder Monomode) bestehenden Lichtwellenleiter ünempfindlich gegen die auf See vorhandenen rauen Umgebungsbedingumgen sind. Gemäß der Erfindung weist darüber hindaus die Hauptebene des Netzwerkes eine dreidimensionale Gitterstruktur auf, die sich räumlich zumindest teilweise über das Fahrzeug erstreckt, vorzugsweise sich jedoch über das gesamte Fahrzeug, insbesondere ein Schiff erstreckt. Diese Gitterstruktur hat den Vorteil, dass Gitterknoten, gebildet sind, die stets gleichzeitig von mehreren Seiten des Knotens versorgt sind. Auf diese Weise ist sichergestellt, dass bei einem Ausfall eines Strangs, wie er beispielsweise durch eine Kollision oder einen sonstigen, nicht vorhergesehenen Eingriff erfolgen kann, das Netzwerk und insbesondere auch die verbleibenden Knoten datenversorgt sind.

Wenn sich die Gitterstruktur im Wesentlichen über das gesamte Fahrzeug erstreckt, ist sichergestellt, dass die Datenversorgung der Knoten über mehrere Wege auch an entlegenen Stellen erfolgt. Es können dann sicherheitsrelevante Anlagen mit kurzen elektrischen Leitungen angeschlossen werden, da die großen Entfernungen über das datenintensive Lichtwellenleiternetzwerk überbrückt werden.

Bevorzugt sind an Knoten der Hauptebene des Netzwerkes Unterbenen angeschlossen, wobei vorteilhaft auch diese Unterebenen des Netzwerks jeweils als Lichtwellenleitemetzwerke ausgebildet sind. Es kann dann bis in die Unterebene mit sehr hoher Datendichte gearbeitet werden, so dass das Netzwerk auch für datenintensive Kommunikationseinrichtungen wie beispielsweise Video on Demand genutzt werden kann, ohne das Netzwerk zu überlasten.

Um auch in der unmittelbar an die Hauptebene anschließenden Unterebene ein hohes Maß an Sicherheit zu gewährleisten, weisen die Lichtwellenleiternetzwerke der unmittelbar an die Hauptebene anschließenden Unterebenen Ringstruktur auf, so dass bei einer Unterbrechung eines Lichtwellenleiters der Datenfluss innerhalb der Unterebene nicht unterbrochen wird, Die Gitterstruktur in der Hauptebene in Verbindung mit der Ringstruktur in der Unterebene schafft somit eine redundanzähnliche Sicherheit.

Gemäß einer Weiterbildung der Erfindung sind an das Lichtwellenleiternetzwerk, bevorzugt an den Unterebenen, Netzwerkrechner angeschlossen, die als Netzwerkrechnerbaueinheiten ausgebildet sind und jeweils zum Anschluss von Komponenten für Steuereinrichtungen Signaleinrichtungen und/oder Kommunikationseinrichtungen ausgebildet sind. Innerhalb dieser Netzwerkrechnerbaueinheiten wird also der im Lichtwelienleiternetzwerk geführte Datenstrom gefiltert, d. h. die Daten werden ihrer Zuordnung entsprechend getrennt und den einzelnen Einrichtungen, seien es Steuereinrichtungen, Signaleinrichtungen oder Kommunikationseinrichtungen, zugeführt.

Diese Netzwerkrechnerbaueinheiten sind vorzugsweise an die Bordnetzstromversorgung angeschlossen, benötigen also keine gesonderte Stromversorgung. Allerdings ist aus Sicherheitsgründen gemäß der Erfindung eine zusätzliche unabhängige Notstromversorgung vorgesehen, welche die elektrische Energieversorgung der Netzwerkrechner bei Ausfall der Bordnetzstromversorgung sicherstellt und somit auch sicherstellt, dass sämtliche sicherheitsrelevanten Einrichtungen bordnetzunabhängig zur Verfügung stehen. Anstelle der bisher einzeln zu versorgenden und abzusichernden Systeme erfolgt dies nun gemäß der erfindund Über die Bordnetzstromversorgung und ggf, durch Absicherung über die Notstromversorgung.

Nach einer vorteilhaften Weiterbildung der Erfindung ist insbesondere für Kreuzfahrt- oder Föhrschiffe, bei weichen Kabinen für Personen vorgesehen sind, eine Kabine mit einer Netzwerkrechnerbaueinheit ausgestattet, wobei die in der Kabine befindlichen elektrischen und/oder elektronischen Geräte und Sensoren vorzugsweise sämflichst an diese Netzwerkrechnerbaueinheit angeschlossen sind. Die Netzwerkrechnerbaueinheit wird somit über das Bordnetz elektrisch versorgt, erhält über das Lichtwellenleiternetzwerk Daten und versorgt ihrerseits sämtliche in der Kabine befindlichen elektrischen und elektronischen Einrichtungen. Die Netzwerkrechnerbaueinheit stellt somit die Schnittstelle zwischen dem schiffseigenen Lichtwellenleiternetzwerk sowie der Bordnetzstromversorgung einerseits und den kabineneigenen Verbrauchern und Geräten andererseits dar.

Bevorzugt kann die gesamte Kabine mit Netzwerkrechnerbauelnheit, den Einbauten und ggf. vorhandenen elektrischen und/oder elektronischen Geräten und Sensoren ggf. auch außerhalb der werft vorgefertigt werden, um dann als Baueinheit in den Schiffskörper eingegliedert und mittels der Netzwerkrechnerbaueinheit elektrisch und netzwerkseitig angeschlossen zu werden. Der elektrische Anschluss beschränkt sich dabei vorzugsweise nur noch auf den Anschluss an die Bordnetzstrom-versorgung sowie die davon unabhängige Notstromversorgung. Alles Weitere erfolgt über die innerhalb der Kabine bereits voreingebaute Netzwerkrechnerbaueinheit. Der datenmäßige. Anschluss erfolgt da-durch, dass die Netzwerkrechnerbaueinheit in die Ringstruktur des Lichtwellenleitemetzwerks der Unterebene eingegliedert wire, indem die von beiden Seiten kommenden Lichtwellenleiter an die Netzwerkrechner-baueinheit angeschlossen werden.

Die Netzwerkrechnerbaueinheit stellt somit nicht nur die datenmäßige-Schnittstelle zwischen dem Lichtwellenleiternetzwerk und den elektroni-schen Komponenten der einzelnen Einrichtungen dar, sondern bildet darüber hinaus auch die zentrale Schnittstelle für die Stromversorgung.

Kernstück der Netzwerkrechnerbaueinheit ist ein optoelektronischer Wandler mit mindestens einem, vorzugsweise jedoch zwei optischen Datenanschlüssen, mit denen die Netzwerkrechnerbaueinheit in die Ringstruktur der Unterebene des Lichtwellenleiternietzwerks eingliederbar ist.

Gemäß einer Weiterbildung der Erfindung ist die Netzwerkrechnerbaueinheit so aufgebaut, dass dem optoelektronischen Wandler eine zentrale Rechnereinheit nachgeschaltet ist, welche die am Ausgang des Wandlers in Form eines elektrischen Signals zur Verfügung stehenden Daten verarbeitet und den einzelnen Einrichtungen zuordnet. Soweit es Einrichtungen angeht, die unmittelbar an das digitale Netzwerk anschließen, ist es zweckmäßig, diese Daten auch unmittelbar, d. h. parallel zur zentralen Rechnereinheit in Form von LAN-Anschlüssen herauszuführen, um hierüber Endgeräte wie IP-Telefon, PC oder dergleichen unmittelbar anschließen zu können. Es ist daher, zwischen dem optoelektronischen Wandler und der zentralen Rechnereinheit ein Hub oder vorzugsweise ein Switch geschaltet, dessen Netzwerkanschlüsse als Schnittstellen der Netzwerkrechnerboueinheit in form von LAN-Anschlüssen herausgeführt sind, wobei einer der Netzwerkanschlüsse intern und nur mit der zentralen Rechnereinheit verbunden ist.

Die zentrale Rechnereinheit verarbeitet die erhaltenen Daten und stellt diese wiederum über digitale Schnittstellen zur Verfügung. Es weist die Netzwerkrechnerbaueinheit als digitale Schnittstellen vorzugsweise RS 485 Schnittstellen auf, über die insbesondere das Feuermeldesystem, die kabineneigene Klimaanlage, ein Bedieninterface und andere Einrichtungen anschließbar sind.

Vorteilhaft ist die Netzwerkrechnerbaueinheit, so ausgestaltet, dass an sie unmittelbar die in der Umgebung, insbesondere die in der Kabine erforderliche Sensorik anschließbar ist. So ist vorzugsweise ein Anschluss für einen Temperatursensor vorgesehen. Zum Anschluss eines solchen Sensors ist der zentralen Rechnereinheit vorteilhaft ein Analog-Digital-Wandler zugeordnet, so dass das analoge Sensorsignal umittelbar in der zentralen Rechnereinheit weiterverarbeitet oder auch nur weiterge-leitet werden kann.

Über die Netzwerkrechnerbaueinheit erfolgt vorteilhaft die gesamte Stromversorgung innerhalb der Kabine. Die Netzwerkrechnerbaueinheit weist daher vorteilhaft diverse Anschlüsse für die Stromversorgung von elektrischen Verbrauchern wie Lampen, Lüfter oder dergleichen sowie auch Anschlüsse zum Steuern dieser Verbraucher, also Schalter/Taster auf. Da die Netzwerkrechnerbaueinheit mit dem Lichtwellenleiternetzwerk des Schiffs in Datenverbindung steht, kann mit Hilfe der Netzwerkrechnerbaueinheit auch der jeweilige in der Kabine befindliche an der Netzwerkrechnerbaueinheit angeschlossene Verbraucher zentral gesteuert werden. So ist es beispielsweise möglich, über das Netzwerk zentral die Verbraucher in den Kabinen abzuschalten, die nicht belegt sind.

Die Netzwerkrechnerbaueinheit ist dabei so ausgelegt, dass zwar einer-seits eine Steuerung der angeschlossenen Verbraucher über an die Baueinheit angeschlossene Taster oder Schalter sowie auch zertral ü-ber das Netzwerk möglich ist, dass aber andererseits sichergestellt ist, dass in einer Notsituation, wenn z. B. die Netzwerkrechnerbaueiheit ausfällt, sichergestellt ist, dass der Verbraucherstromkreis innerhalb der Kabine versorgt ist, Hierzu ist der den Lampen zugeordnete Verbraucheranschluss über ein Relais innerhalb der Netzwerkrechnerbaueinheit angesteuert, derart, dass bei Abfall des Relais der Verbraucherstromkreis schließend angesteuert wird, um auf diese Weise unabhängig von der Netzwerkrechnerbaueinheit die Stromversorgung innerhalb der Ka-bine, insbesondere der Lampen sicherzustellen.

Da die Netzwerkrechnerbaueinheit zusätzlich zu der normalen Stromversorgung an eine Notstromversorgung angeschlossen ist, kann hierüber auch die Notstromversorgung der Lampen erfolgen. Die Netzwerkrechnerbaueinheit hat hierzu getrennte Eingangsanschlüsse für die normale Stromversorgung einerseits und die Notstromversorgung andererseits und weist darüber hinaus zwei Anschlüsse für die Lichtwellenleiter auf. Alle übrigen Anschlüsse der Netzwerkrechnerbauelnheit betreffen die Versorgung innerhalb der Kabine.

Die Netzwerkrechnerbaueinheit weist ein Betriebssystem und ggf, darauf aufbauende Software auf, die in einem oder mehren Halbleiterspeichern gespeichert sind und vorzugsweise über das Netzwerk überschrieben werden kann, so dass es mit einem zentralen Netzwerkbefehl möglich ist, die Betriebssysteme sämtlicher Netzwerkrechnerbaueinheiten oder von Gruppen von Netzwerkrechnerbaueinheiten und/oder die darauf befindliche Software upzudaten, zu modifizleren oder zu ersetzen.

Es wird die Netzwerkrechnerbaueinheit auch für das bordeigene Laut-sprechersystem eingesetzt. Hierzu ist innerhalb der Netzwerkrechner-baueinheit der zentralen Rechnereinheit ein Digital-Analog-Wandler nachgeschaltet, der einen Analogverstärker beaufschlagt, dessen Ausgang an einem Übertrager anliegt. Der Ausgang des Übertragers wiederum bildet den Anschluss für einen oder mehrere Lautsprecher, die in schiffsüblicher Weise jeweils mittels eines lautsprechereigenen Übertragers anschließbar sind. Auf diese Weise kann das auf Schiffen übliche Lautsprecherübertragungssystem auch in Verbindung mit der Netzwerkrechnerbaueinheit betrieben werden. Die zu übertragenden akustischen Signale werden an zentralen Stellen über ein Mikrofon und einen Analog-Digital-Wandler oder von einem digitalen Speichermedium mit entsprechender Adressierung in das Netzwerk eingegeben. Innerhalb der Netzwerkrechnerbaueinheit wird das Signal in der zentralen Rechnereinheit entschlüsselt und wiederum dem Digital-Analog-Wandler und den vorstehend genannten Baugruppen zugeführt.

Da über das schiffseigene Lichtwellenleiternetzwerk nich nur kommunikations-, sondern auch Steuer- und Signaleinrichtungen versorgt werden, ist in vorteilhafter Weiterbildung die Netzwerkrechnerbaueinheit mit mindestens einem Anschluss für eine Feuermeldeschleife versehen, so dass über die Netzwerkrechnerbaueinheit auch die in der Kabine vorhandenen Feuermeldeeinrichtungen anschließbar sind.

Um innerhalb der Kabine möglichst wenig Verkabelung für die Stromversorgung vorsehen zu müssen, ist es zweckmäßig, in die Netzwerkrechnerbaueinheit die für die ausgehende Stromversorgung und/oder interne Stromversorgung erforderlichen Sicherungsautomaten vorzusehen. Die Netzwerkrechnerbaueinheit kann als kompakte Baueinheit nach Art eines Sicherungskastens zur Wand- oder Bodenmontage ausgebildet und unauffällig innerhalb der Kabine integriert sein zweckmäßigerweise an einer Wand, durch welche die Anschlüsse für das Lichtwellenleitemetzwerk und die Stromversorgung auf kurzem Weg durchgeführt werden können.

Es versteht sich, dass die vorstehend angesprochenen Funktionen der Netzwerkrechnerbaueinheit besonders günstig für den Einsatz in einer Passagierkabine sind. Entsprechende Modifizierungen können vorgenommen werden, wenn andere Schiffsbereiche mit einer solchen Netzwerkrechnerbaueinheit versorgt werden sollen.

Die Erfindung ist nachfolgend anhand eines in der Zeichnung dargestellten Ausführungsbeispiels näher erläutert. Es zeigen:
- Fig. 1: die Netzwerkstruktur gemäß der Erfindung in einer Deckebene,
- Fig. 2: die Netzwerkstruktur gemäß der Erfindung über die Decks verteilt,
- Fig. 3: in stark vereinfachter Darstellung die Draufsicht auf eine Kabine mit deren elektrischen und elektronischen Einrichtungen einschließlich der Netzwerkrachnerbaueinheit und
- Fig. 4: den Aufbau einer Netzwerkrechnerbaueinheit

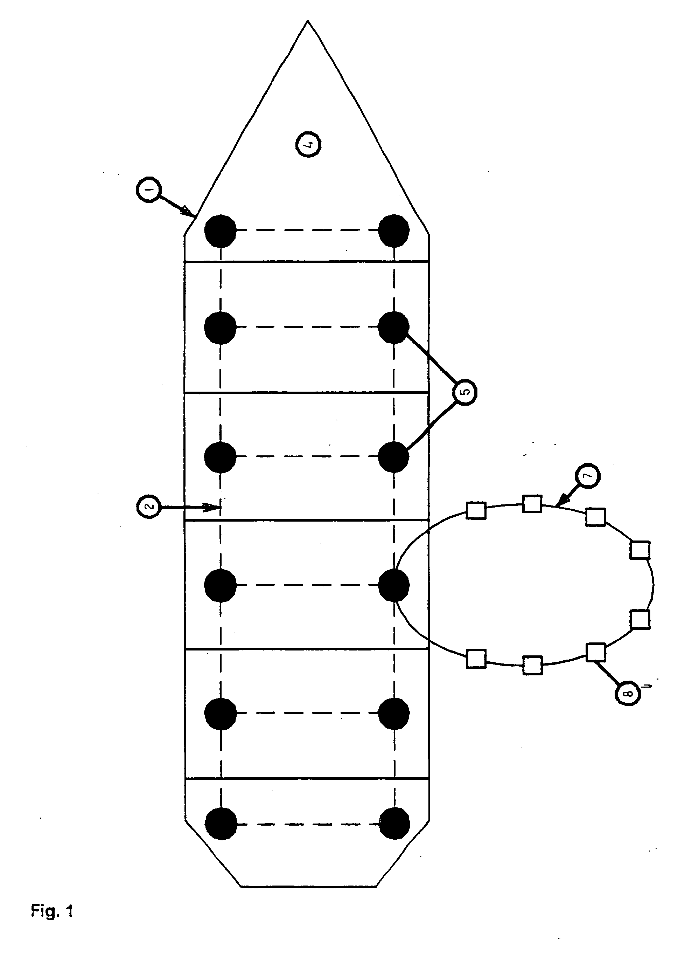

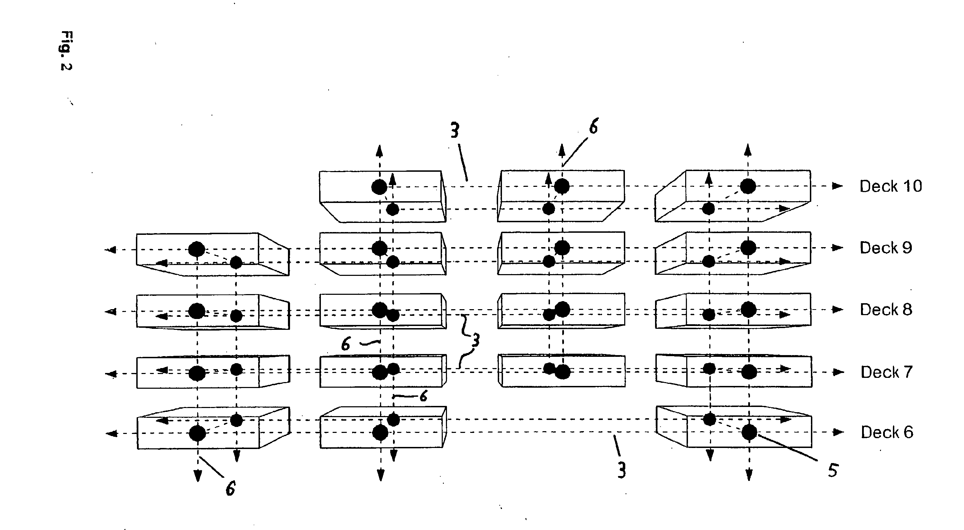

Anhand der Figuren 1 und 2 ist die Netzwerkstruktur eines Schiffes 1 dargestellt. Die Hauptebene 2 des Netzwerks ist als Lichtwellenleiternetzwerk ausgebildet und weist eine dreidimensionale Gitterstruktur auf. Dieses Gitter der Hauptebene besteht aus mehreren übereinander angeordneten Gittern 3, die jeweils einem Deck 4 zugeordnet sind. Die deckweise angeordneten Gitter 3 sind an ihren Kreuzpunkten zu Knoten 5 ausgebildet, die über vertikale, die Decks 4 durchsetzende Leiter 6 mit den Knoten 5 der darüber bzw. darunter angeordneten Gitter 3 netzverbunden sind. Jeder Knoten 5 ist durch einen Switch oder Hub gebildet. Wie in Fig. 2 anhand der obersten sowie der untersten Gitter 3 dargestellt ist, müssen die Gitter 3 der einzelnen Deckebenen nicht zwingend identisch ausgebildet sein, eine Verbindung in Form eines vertikalen Leiters 6 erfolgt nur dort wo darüber bzw. darunter liegend auch ein Knoten 5 vorhanden ist. In analoger Weise können auch die horizontalen Gitterebenen 3 ausgebildet sein. Im gesamten Bereich der Hauptebene 2 des Netzwerkes ist dieses als Lichtwellenleiternetzwerk ausgebildet. Die dreidimensionale Gitterstruktur, wie sie anhand der Figuren 1 und 2 schematisch dargestellt ist, dient im Wesentlichen der Sicherheit des Netzes, beispielsweise bei Ausfall eines Knotens 5 oder eines Leiters zwischen zwei Knoten 5, damit in jedem Fall sichergestellt ist, dass dadurch keine Netzwerkunterbrechung erfolgt.

An die Hauptebene 2 des Netzwerkes schließen Unterebenen 7 an, die ebenfalls als Lichtwellenleiternetzwerke in dieser Unterebene 7 ausgebildet sind, jedoch Ringstrukturen aufweisen. Diese Unterebenen 7 sind über Knoten 5 an die Hauptebene 2 angeschlossen, wie dies in Fig. 1 beispielhaft für eine Unterebene 7 dargestellt ist. Es können solche Unterebenen an jedem Knoten 5 angeschlossen werden, es können jedoch auch Knoten 5 insoweit unbelegt bleiben.

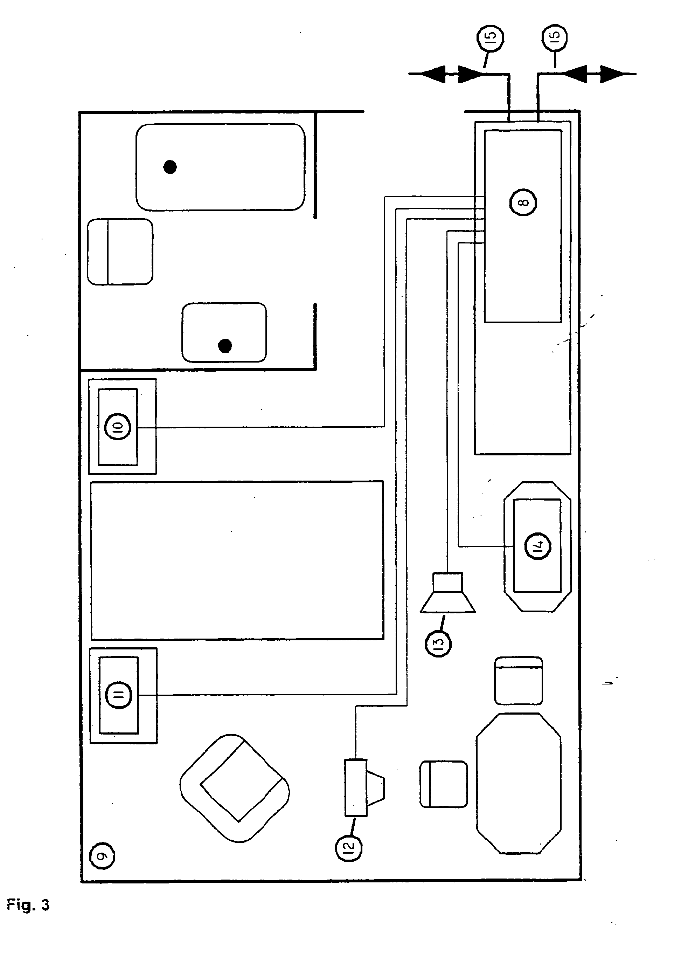

In jeder Unterebene 7 sind Netzwerkrechnerbaueinheiten 8 angeschlossen in denen die aus dem Lichtwellenleiternetzwerk kommenden optischen Signale in elektrische umgesetzt werden und welche eine örtliche Anschlussbaueinheit für Steuereinrichtungen, Signaleinrichtungen und Kommunikationseinrichtungen bilden. Solche Netzwerkrechnerbaueinheiten 8 werden beispielsweise bei Kreuzfahrtschiffen oder Fährschiffen jeder einzelnen Kabine 9 zugeordnet (Fig. 3).

In der Kabine 9 sind zum Beispiel vorgesehen: ein Klimagerät 10, ein IP-Telefon 11, ein Feuerdetektor 12, ein Lautsprecher 13, eine TV-Box 14, diese werden sämtlichst über die Netzwerkrechnerbaueinheit 8 angeschlossen und versorgt. Die Aufzählung dieser Geräte ist nur beispielhaft und nicht abschließend. Darüber hinaus sind sämtliche elektrischen Verbraucher über die Netzwerkrechnerbaueinheit 8 gespeist, die auch die Sicherungsautomaten umfasst.

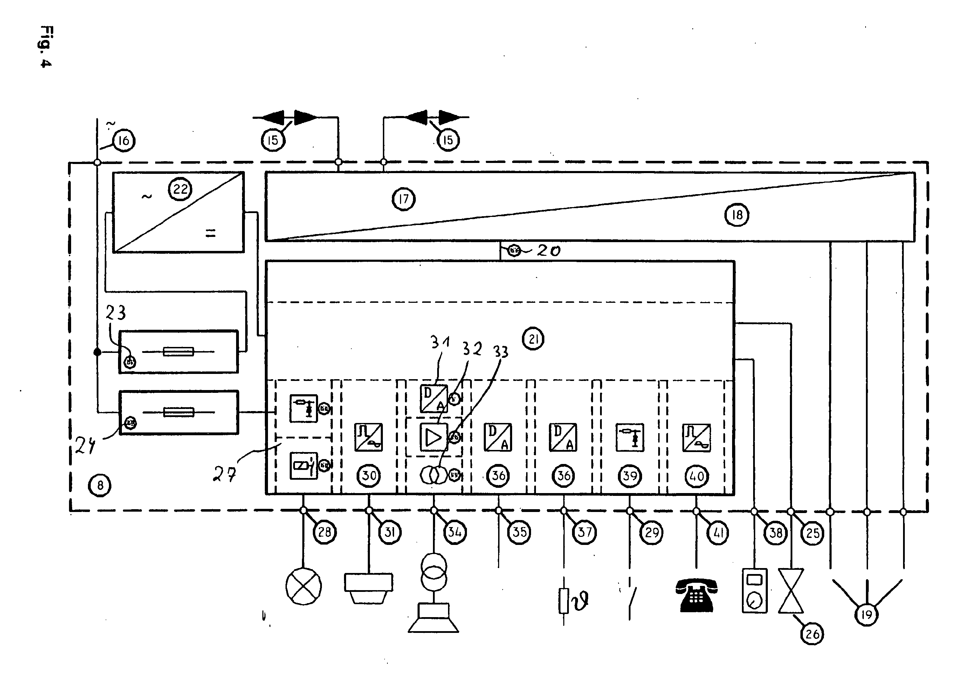

Angeschlossen ist die Netzwerkrechnerbaueinheit 8 über zwei optische Anschlüsse 15, über die die Netzwerkrechnerbaueinheit 8 in eine Unterebene 7 des Netzwerkes eingegliedert wird. Die Netzwerkrechnerbaueinheit 8 ist über einen Anschluss 16 an die Bordnetzstromversorgung angeschlossen. Zusätzlich ist ein (in Fig. 4 nicht dargestellter) Anschluss für eine Notstromversorgung vorgesehen, so dass schiffsseitig die Netzwerkrechnerbaueinheit lediglich vier Anschlüsse aufweist, welche mit dem Netzwerk bzw. dem bordeigenen Stromversorgungsnetzen zu verbinden sind.

Eine mit einer solchen Netzwerkrechnerbaueinheit 8 ausgestattete Kabine 9 kann somit auch hinsichtlich der elektrischen und elektronischen Verdrahtung vollständig vorgefertigt werden und als Baueinheit in den Schiffskörper eingegliedert werden, wobei dann lediglich noch diese vier Anschlüsse der Netzwerkrechnerbaueinheit 8 zu belegen sind, um den vollständigen elektrischen und elektronischen Anschluss der Kabine zu realisieren, also auch die Eingliederung in die schiffseigene Feuermeldeanlage sowie das bordübliche Lautsprecherübertragungssystem und gegebenenfalls weitere sicherheitsrelevante Einrichtungen. Darüber hinaus sind sämtliche Kommunikationseinrichtungen über die Netzwerkrechnerbaueinheit 8 innerhalb der Kabine 9 angeschlossen.

Anhand von Fig. 4 ist der Aufbau einer solchen Netzwerkrechnerbaueinheit 8 dargestellt. Die optischen Anschlüsse 15 sind innerhalb der Netzwerkrechnerbaueinheit mit einem optoelektronischen Wandler 17 verbunden, der die über das Netzwerk empfangenen Lichtsignale in digitale elektrische Signale umwandelt und die in das Netz zu sendenden elektrischen Signale in optische umsetzt. Integraler Bestandteil des Wandlers 17 ist ein Switch 18, der im vorliegenden Ausführungsbeispieles 4 LAN-Anschluss umsetzt, von denen drei in Form Anschlüssen 19 als unmittelbare Anschlüsse für IP-Telefon, PC und Internet bzw. Intranet zur Verfügung stehen und ein interner Anschluss 20, der einer zentralen Rechnereinheit 21 in Form eines Mikrocontrollers zugeführt ist. Die zentrale Rechnereinheit 21, welche sowohl Prozessor als auch elektronischen Speicher umfasst, in dem das Betriebssystem und die darauf basierende Software abgelegt ist, steuert alle weiteren Schnittstellen der Baueinheit 8.

Elektrisch versorgt wird die zentrale Rechnereinheit 21 über ein Netzteil 22, das gesondert mittels einer Sicherung 23 abgesichert und unmittelbar an der Bordnetzstromversorgung 16 anliegt. Parallel dazu liegt über eine weitere Sicherung 24 die übrige Stromversorgung am Bordnetzanschluss 16 an, über welche alle weiteren kabinenseitigen Verbraucher sowie sämtliche von der zentralen Rechnereinheit 21 gesteuerten Aggregate stromversorgt sind.

Die zentrale Rechnereinheit 21 weist einen als Anschluss 25 aus der Netzwerkrechnerbaueinheit 8 herausgeführten Anschluss auf, der hier zum Anschluss eines Stellglieds 26 für die Klimaanlage vorgesehen ist. Der Anschluss ist in Form einer RS 485-Schnittstelle ausgestaltet. Es versteht sich, dass in analoger Weise nahezu beliebige Steuerungsfunktionen durch die zentrale Rechnereinheit 21 in Form eines entsprechenden Anschlusses realisiert werden können, beispielsweise auch die sicherheitsrelevante Steuerung von Feuertüren, wasserdichten Schutzschiebetüren und dergleichen.

Die zentrale Rechnereinheit 21 beinhaltet weiterhin einen Lichtsteuerkreis 27, der einen Anschluss 28 ansteuert, an welchen die in der Kabine befindlichen Lampen angeschlossen sind. Der Lichtsteuerkreis ist, wie die Symbolik in Fig. 4 zu 27 verdeutlicht, zum einen durch eine Signalkonditionierung gebildet, zum anderen durch ein Relais. Der Lichtsteuerkreis 27 schaltet hierbei lediglich das Relais, und zwar so, dass mittels des Relais bei Abfall desselben die Leitungsverbindung zwischen der Bordnetzversorgung und dem Anschluss 28 geschlossen wird, so dass beim Ausfall der zentralen Rechnereinheit 21 die Stromversorgung der Lampen stets sichergestellt ist. Die Schaltung ist also nach dem fail to save Prinzip ausgeführt.

Weiterhin ist ein Anschluss 29 aus der Netzwerkrechnerbaueinheit herausgeführt, welcher beispielhaft zum Anschluss digitaler Sensoren, Taster und dergleichen steht. Der hier dargestellte Anschluss 29 dient zum Anschluss eines Tasters, der wiederum über die zentrale Rechnereinheit 21 den Anschluss 28 und somit die in der Kabine befindlichen Lampen ansteuert. Es können also innerhalb der Kabine ein oder mehrere Taster vorgesehen werden, welche an einen oder mehrerer solcher Anschlüsse 29 angeschlossen werden und über die dann die an einen oder mehreren solcher Anschlüsse 28 angeschlossenen Lampen gesteuert werden, mit dem Vorteil, dass die leistungsführenden Leitungen, welche die Lampen oder gegebenenfalls andere elektrische Geräte versorgen, auf kürzestem Weg mit dem Netzwerkrechnerbaueinheit 8 verbunden werden können, wohingegen die Taster mit im Querschnitt vergleichsweise dünnen Signalleitungen verkabelt werden können, die zudem für den Niedervoltbereich dann mit einer einfachen Isolierung auskommen. Auch hierdurch erfolgt eine erhebliche Einsparung von Kabelressourcen im Vergleich zum Stand der Technik.

Die zentrale Rechnereinheit 21 weist eine weitere interne RS 485-Schnittstelle auf, an die ein Feuermeldemodul 30 angeschlossen ist, dessen Ausgang 31 wiederum den Anschluss für eine Feuermeldeschleife bildet. An diese Feuermeldeschleife können in an sich bekannter Weise wie im Schiffbau üblich, einzel adressierbare Feuermelder digital angeschlossen werden. Es werden hier also sämtliche Feuermeldeeinrichtungen der Kabine oder auch in unmittelbarer Nähe der Kabine angeschlossen.

Für Lautsprecherdurchsagen, wie sie auf Schiffen üblicherweise mit einem 100 Volt Lautsprechersystem erfolgen, ist das Netzwerk ebenfalls ausgelegt. Die Lautsprecherdurchsagen erfolgen nach entsprechender Umwandlung durch digitale Einspeisung in das Netzwerk. In der Netzwerkrechnerbaueinheit 8 wird das digitale Signal in der zentralen Rechnereinheit 21 erfasst, einem Digital-Analog-Wandler 31 zugeführt, dem ein Analogverstärker 32 sowie ein Übertrager 33 nachgeschaltet ist. Der Ausgang des Übertragers 33 bildet einen Anschluss 34 der kompatibel mit den üblichen 100 Volt Lautsprecheranschlüssen, wie sie auf Schiffen üblich sind, ist. An diesem Anschluss kann ein entsprechender Lautsprecher mit vorgeschalteten Übertrager angeschlossen werden, wie dies in Fig. 4 symbolisiert dargestellt ist.

Die Ansteuerung der Lautsprecher über die Netzwerkrechnerbaueinheiten 8 hat gegenüber konventionell verdrahteten Lautsprecheranlagen auch den wesentlichen Vorteil, dass die Lautsprecher über die einzelnen Netzwerkrechnerbaueinheiten 8 einzeln adressierbar sind, so dass Durchsagen auch nur gruppenweise, für individuell definierbare Kabinengruppen erfolgen können.

Weiterhin weist die Netzwerkrechnerbaueinheit 8 einen analogen Anschluss 35 auf, dem ein Analog-Digital-Wandler 36 zugeordnet ist, dessen digitaler Ausgang mit der zentralen Rechnereinheit 21 in Verbindung steht. Über den Anschluss 35 kann beispielsweise ein analoges Sensorsignal aufgeschaltet werden. Ein vergleichbarer Analoganschluss 37 dem ebenfalls ein Analog-Digital-Wandler 36 aufgeschaltet ist, dient hier zum Anschluss eines Temperatursensors zur Regelung der Klimaanlage.

Schließlich ist aus der zentralen Rechnereinheit 21 noch ein Anschluss 38 herausgeführt, der zum Anschluss eines externen Stellglieds für die Klimasteuerung dient. Dieser Anschluss 38 arbeitet ebenfalls mittels einer RS 485-Schnittstelle.

Die vorstehend beschriebenen Anschlüsse bzw. die Signalkonitionierungen 39, 40 sind nur beispielhaft für die möglichen Funktionen der Netzwerkrechnerbaueinheit 8 angeführt, es versteht sich, dass je nach Anforderung ein oder mehrerer solcher Anschlüsse vorgesehen sein können. So kann beispielsweise über LAN-Anschlüsse 19 sowohl ein PC mit Zugang zum schiffeigenen Intranet und/oder ein Internetzugang erreicht werden. Weiterhin kann über einen LAN-Anschluss 19 auch ein Video-On-Demand-System angeschlossen werden, welches die schiffseigenen Videoprogramme auf einen in der Kabine befindlichen Monitor überträgt. Schließlich kann über einen LAN-Anschluss die kabineneigene Minibar angeschlossen werden, so dass über das Netzwerk automatisch der Verbrauch aus der Minibar erfassbar, abrechenbar und die Wiederbefüllung organisierbar ist. Auch kann ein Anschluss 41 für ein Analog- oder ISDN-Telefon vorgesehen sein.

Über eine RS 485-Schnittstelle kann beispielsweise auch ein Bedienpanel angeschlossen werden, dass zum Steuern eines Teils oder sämtlicher Kabinenfunktionen, also beispielsweise auch der Lampensteuerung, der Klimaanlagensteuerung, der Videosteuerung und gegebenenfalls weiterer Funktionen dient.

Die zentrale Rechnereinheit 21 weist neben dem Mikroprozessor/Mikrocontroller, welcher die zur Ansteuerung der Ports erforderlichen Rechenvorgänge übernimmt, noch elektronische Speicher in Form von Flash-EPROMs oder Compactflash-Karten auf, welche das Betriebssystem sowie die Anwendungssoftware beinhalten. Die zentrale Rechnereinheit 21 kann mittels eines vorzugsweise verdeckt in der Netzwerkrechnerbaueinheit 8 angeordneten Reset-Schalters zurückgesetzt werden oder aber auch extern über einen entsprechenden Netzwerkbefehl. Durch die Speicherung des Betriebssystems sowie der Anwendungssoftware innerhalb der zentralen Rechnereinheit 21 ist einerseits gewährleistet, dass bei einem Reset die zentrale Rechnereinheit 21 binnen weniger Sekunden wieder hochfährt, andererseits können über das Netzwerk Änderungen im Betriebssystem oder der Software erfolgen, ohne das Einrichtungsarbeiten vor Ort erforderlich sind.

Die mit der zentralen Recheneinheit 21 in Verbindung stehenden Baugruppen, wie beispielsweise Lichtsteuerkreise 27, Analog-Digital-Wandler 36 oder dergleichen können ähnlich wie das Feuermeldemodul 30 jeweils modular ausgebildet sein, so dass die Netzwerkrechnerbaueinheit 8 entsprechend den örtlichen Anforderungen durch entsprechenden Einsatz von Modulen mit zugeordneten Anschlüssen konfigurierbar ist. Auf diese Weise können weitgehend einheitliche Systemkomponenten Verwendung finden.

### Bezugszeichenliste

- 1 -: Schiff
- 2 -: Hauptebene des Netzwerks
- 3 -: horizontale Gitter
- 4 -: Deck
- 5 -: Knoten
- 6 -: Leiter (vertikal)
- 7 -: Unterebenen des Netzwerkes
- 8 -: Netzwerkrechnerbaueinheiten
- 9 -: Kabine
- 10 -: Klimagerät
- 11 -: ISDN-Telefon
- 12 -: Feuerdetektor
- 13 -: Lautsprecher
- 14 -: TV-Box
- 15 -: optischer Anschluss
- 16 -: Stromversorgungsanschluss
- 17 -: optoelektronischer Wandler
- 18 -: Switch
- 19 -: LAN-Anschlüsse
- 20 -: LAN-Anschluss intern
- 21 -: zentrale Rechnereinheit
- 22 -: Netzteil
- 23 -: Sicherung
- 24 -: Sicherung
- 25 -: Anschluss
- 26 -: Stellglied
- 27 -: Lichtstromkreis
- 28 -: Anschluss
- 29 -: Anschluss
- 30 -: Feuermeldemodul
- 31 -: Digital-Analog-Wandler
- 32 -: Verstärker
- 33 -: Übertrager
- 34 -: Anschluss
- 35 -: Analoganschluss
- 36 -: Analog-Digital-Wandler
- 37 -: Analoganschluss
- 38 -: Anschluss
- 39 -: Signalkonditionierung für die digitale Eingänge
- 40 -: Signalkonditionierung Telefon(Analog oder ISDN)
- 41 -: Telefonanschluss

## Patentansprüche

1. Wasserfahrzeug, insbesondere Schiff zur Beförderung von Personen und/oder Gütern, mit einer Vielzahl von Steuereinrichtungen, Signaleinrichtungen und Kommunikationseinrichtungen, die über ein gemeinsames digitales Netzwerk (2, 7) verbunden sind, das zumindest in seiner Hauptebene (2) als Lichtwellenleiternetzwerk ausgebildet ist, **dadurch gekennzeichnet, dass** die Hauptebene (2) des Netzwerkes (2, 7) eine dreidimensionale Gitterstruktur aufweist, die sich räumlich zumindest teilweise über das Fahrzeug (1) erstreckt.

2. Wasserfahrzeug nach Anspruch 1, **dadurch gekennzeichnet, dass** die Hauptebene (2) des Netzwerkes (2, 7) über Knoten (5) mit Unterebenen (7) des Netzwerks verbunden ist und dass die unmittelbar an die Hauptebene (2) anschließenden Unterebenen (7) jeweils als Lichtwellenleiternetzwerk ausgebildet sind.

3. Wasserfahrzeug nach einem der vorhergehenden Ansprüche, **dadurch gekennzeichnet, dass** die Lichtwellenleiternetzwerke der unmittelbar an die Hauptebene anschließenden Unterebenen (7) Ringstruktur aufweisen.

4. Wasserfahrzeug nach einem der vorhergehenden Ansprüche, **dadurch gekennzeichnet, dass** an das Lichtwellenleiternetzwerk (2, 7) vorzugsweise der Unterebenen (7) Netzwerkrechner angeschlossen sind, die als Netzwerkrechnerbaueinheiten (8) jeweils zum elektrischen Anschluss von Komponenten für Steuereinrichtungen, Signaleinrichtungen und/oder Kommunikationseinrichtungen ausgebildet sind.

5. Wasserfahrzeug nach einem der vorhergehenden Ansprüche, **dadurch gekennzeichnet, dass** vorzugsweise alle Netzwerkrechnerbaueinheiten (8) an die Bordnetzstromversorgung angeschlossen sind und dass eine von der Bordnetzstromversorgung unabhängige Notstromversorgung vorgesehen ist, welche die elektrische Energieversorgung der Netzwerkrechner bei Ausfall der Bordnetzstromversorgung sichert.

6. Wasserfahrzeug nach einem der vorhergehenden Ansprüche, **dadurch gekennzeichnet, dass** Kabinen (9) für Personen vorgesehen sind, und dass eine Kabine (9) mit einer Netzwerkrechnerbaueinheit (8) ausgestattet ist, an welche die in der Kabine (9) befindlichen elektrischen und/oder elektronischen Geräte (10, 11, 12, 13, 14) und Sensoren angeschlossen sind.

7. Wasserfahrzeug nach einem der vorhergehenden Ansprüche, **dadurch gekennzeichnet, dass** die Kabine (9) mit der Netzwerkrechnerbaueinheit (8), den Einbauten, und ggf. vorhandenen elektrischen und/oder elektronischen Geräten (10, 11, 12, 13, 14) und Sensoren vorgefertigt und als Baueinheit in den Schiffskörper (1) eingegliedert und mittels der Netzwerkrechnerbaueinheit (8) elektrisch angeschlossen ist.

## Claims

1. Water vehicle, in particular a ship for conveying passengers and/or commodities, with a plurality of control systems, signalling systems and communication systems connected via a common digital network (2, 7) which is configured as an optical waveguide network, at least in its main level (2), **characterised in that** the main level (2) of the network (2, 7) has a three-dimensional lattice structure which extends spatially in three dimensions at least partially across the vehicle (1).

2. Water vehicle as claimed in claim 1, **characterised in that** the main level (2) of the network (2, 7) is connected to sub-levels (7) of the network via nodes (5) and the sub-levels (7) providing direct links to the main level (2) are each configured as optical waveguide networks.

3. water vehicle as claimed in one of the preceding claims, **characterised in that** the optical waveguide networks of the sub-levels (7) providing direct links to the main level have a ring structure.

4. Water vehicle as claimed in one of the preceding claims, **characterised in that** network computers configured as network computer units (8) are preferably connected to the optical waveguide network (2, 7) of the sub-levels (7) in order to provide an electrical connection for components for control systems, signalling systems and/or communication systems.

5. Water vehicle as claimed in one of the preceding claims, **characterised in that** all the computer network units (8) are connected to the on-board main power supply and an emergency power supply is provided independently of the on-board main power supply which provides the electrical power supply to the network computers if the on-board main power supply fails.

6. water vehicle as claimed in one of the preceding claims, **characterised in that** passenger cabins (9) are provided and a cabin (9) is provided with a network computer unit (8) to which the electrical and/or electronic devices (10, 11, 12, 13, 14) and sensors in the cabin (9) are connected.

7. water vehicle as claimed in one of the preceding claims, **characterised in that** the cabin (9) is pre-fitted with the network computer unit (8), installations and optionally the available electrical and/or electronic devices (10, 11, 12, 13, 14) and sensors, which are incorporated in the ship's body (1) and electrically connected by means of the network computer unit (8).

## Revendications

1. Bâtiment de navigation, en particulier bateau pour le transport de personnes ou de marchandises, avec de nombreux systèmes de commande, systèmes de signalisation et systèmes de communication, qui sont reliés par l'intermédiaire d'un réseau numérique (2, 7) commun qui est conçu, au moins dans son plan principal (2), en tant que réseau de fibres optiques, **caractérisé en ce que** le plan principal (2) du réseau (2, 7) présente une structure maillée à trois dimensions, qui s'étend spatialement, au moins partiellement, sur le bâtiment de navigation (1).

2. Bâtiment de navigation selon la revendication 1, **caractérisé en ce que** le plan principal (2) du réseau (2, 7) est relié à des plans inférieurs (7) dudit réseau au moyen de noeuds (5), et que les plans inférieurs (7), reliés directement au plan principal (2), sont conçus chacun en tant que réseau de fibres optiques.

3. Bâtiment de navigation selon l'une des revendications précédentes, **caractérisé en ce que** les réseaux de fibres optiques des plans inférieurs (7), directement reliés au plan principal, présentent une structure annulaire.

4. Bâtiment de navigation selon l'une des revendications précédentes, **caractérisé en ce qu'**au réseau de fibres optiques (2, 7) sont raccordés, de préférence, des plans inférieurs (7) d'ordinateurs de réseau, qui, en tant qu'unités informatiques de réseau (8), sont chacun conçus pour former un raccord électrique de composants pour systèmes de commande, systèmes de signalisation et / ou système de communication.

5. Bâtiment de navigation selon l'une des revendications précédentes, **caractérisé en ce que,** de préférence, toutes les unités informatiques de réseau (8) sont raccordées au système d'alimentation en courant du réseau de bord, et **en ce qu'**est prévue un système d'alimentation en courant de secours, indépendante du réseau de bord, lequel assure l'alimentation en énergie électrique des ordinateurs de réseau en cas de défaillance de du système d'alimentation de courant du réseau de bord.

6. Bâtiment de navigation selon l'une des revendications précédentes, **caractérisé en ce que** des cabines (9) sont prévues pour des passagers et qu'une cabine (9) est équipée d'une unité informatique de réseau (8) à laquelle sont raccordés les appareils électriques et / ou électroniques (10, 11, 12, 13, 14) et les capteurs, qui se trouvent dans la cabine (9).

7. Bâtiment de navigation selon l'une des revendications précédentes, **caractérisé en ce que** la cabine (9) est préfabriquée avec l'unité informatique de réseau (8), les éléments encastrés et les appareils électriques et / ou électroniques (10, 11, 12, 13, 14) et les capteurs, prévus le cas échéant, et est intégrée dans le corps du bateau (1), en tant qu'unité modulaire, et est connectée électriquement au moyen d'unités informatiques de réseau (8).
